# EUROPÄISCHE PATENTSCHRIFT

(11) **EP 2 550 329 B1**
(45) Veröffentlichungstag und Bekanntmachung des Hinweises auf die Patenterteilung: **19.03.2014**
(21) Anmeldenummer: 11708892.2
(22) Anmeldetag: 21.03.2011
(51) Int. Cl.: C08L 67/00, C08G 63/00, C08J 5/18

(54) **VERFAHREN ZUR FOLIENHERSTELLUNG**
PROCESS FOR THE PREPARATION OF FILMS
PROCÉDÉ POUR LA PRÉPARATION DES FILMS

(30) Priorität: 24.03.2010 EP 10157538
(43) Veröffentlichungstag der Anmeldung: 30.01.2013
(73) Patentinhaber: BASF SE, 67056 Ludwigshafen (DE)
(72) Erfinder: REN, Liqun, 68163 Mannheim (DE); LOOS, Robert, 67067 Ludwigshafen (DE)
(86) Internationale Anmeldenummer: PCT/EP2011/054268
(87) Internationale Veröffentlichungsnummer: WO 2011/117203

(56) Entgegenhaltungen:
- WO-A1-2004/052646
- WO-A1-2006/074815
- WO-A1-2006/097353
- WO-A1-2011/005178
- DE-A1- 19 508 737

## Beschreibung

Die vorliegende Erfindung betrifft ein Verfahren zur Herstellung von weiterreißfesten Folien unter Verwendung der Polymerkomponenten a) und b):
a) 5 bis 30 Gew.-% eines biologisch abbaubaren Polyesters a) gemäß Anspruch 1 und
b) 95 bis 70 Gew.-% eines aliphatisch-aromatischen Polyesters b) erhältlich durch Polykondensation von:
   i) 40 bis 60 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
   ii) 60 bis 40 mol %, bezogen auf die Komponenten i bis ii, eines Terephthalsäurederivats;
   iii) 98 bis 102 mol %, bezogen auf die Komponenten i bis ii, eines C₂-C₈-Alkylendiols oder C₂-C₆-Oxyalkylendiols;
   iv) 0 bis 2 Gew.-%, bezogen auf das Polymer erhältlich aus den Komponenten i bis iii, eines mindestens trifunktionellen Vernetzers oder eines mindestens difunktionellen Kettenverlängerers.

Außerdem ein Verfahren zur Herstellung von weiterreißfesten Folien unter Verwendung der Polymerkomponenten a), b) und c):
a) 5 bis 30 Gew.-% eines biologisch abbaubaren Polyesters a) gemäß Anspruch 1 und
b) 90 bis 20 Gew.-% eines aliphatisch-aromatischen Polyesters b) erhältlich durch Polykondensation von:
   i) 40 bis 60 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
   ii) 60 bis 40 mol %, bezogen auf die Komponenten i bis ii, eines Terephthalsäurederivats;
   iii) 98 bis 102 mol %, bezogen auf die Komponenten i bis ii, eines C₂-C₈-Alkylendiols oder C₂-C₆-Oxyalkylendiols;
   iv) 0 bis 2 Gew.-%, bezogen auf das Polymer erhältlich aus den Komponenten i bis iii, eines mindestens trifunktionellen Vernetzers oder eines mindestens difunktionellen Kettenverlängerers;
c) 5 bis 50 Gew.-%, eines oder mehrerer Polymere ausgewählt aus der Gruppe bestehend aus: Polymilchsäure, Polycaprolacton, Polyhydroxyalkanoat, Polyal-kylencarbonat, Chitosan und Gluten und eines oder mehrerer Polyester auf Basis von aliphatischen Diolen und aliphatischen Dicarbonsäuren - und
   0 bis 2 Gew.-% eines Verträglichkeitsvermittlers.

WO-A 92/09654 beschreibt lineare aliphatisch-aromatische Polyester, die biologisch abbaubar sind. Vernetzte, biologisch abbaubare Polyester werden in der WO-A 96/15173 beschrieben. Die beschriebenen Polyester weisen einen höheren Terephthalsäuregehalt auf und können hinsichtlich ihrer Filmeigenschaften - insbesondere der Weiterreißfähigkeit nicht immer voll überzeugen.

Ziel der vorliegenden Erfindung war es demnach ein Verfahren zur Herstellung von weiterreißfesten Folien bereitzustellen.

Durch Verwendung der eingangs beschriebenen Polyester, die einen eng definierten Terephthalsäuregehalt und einen eng definierten Gehalt an Vernetzer aufweisen, ließen sich überraschenderweise weiterreißfeste Folien herstellen.

Bevorzugt sind biologisch abbaubare Polyester mit folgenden Bestandteilen:
Komponente i) ist vorzugsweise Adipinsäure und/oder Sebazinsäure.
Komponente iii), das Diol, ist vorzugsweise 1,4-Butandiol.
Komponete iv), der Vernetzer, ist vorzugsweise Glycerin.

Die Synthese der beschriebenen Polyester erfolgt in der Regel in einer zweistufigen Reaktionskaskade (s. WO09/127555 und WO09/127556). Zunächst werden die Dicarbonsäurederivate wie in den Synthesebeispielen zusammen mit dem Diol (beispielsweise 1,4-Butandiol) in Anwesenheit eines Umesterungskatalysators zu einem Präpolyester umgesetzt. Dieser Präpolyester weist im Allgemeinen eine Viskositätszahl (VZ) von 50 bis 100 mL/g, vorzugsweise 60 bis 90 mL/g auf. Als Katalysatoren werden üblicherweise Zink-, Aluminium- und insbesondere Titankatalysatoren eingesetzt. Titankatalysatoren wie Tetra(isopropyl)orthotitanat und insbesondere Tetrabutylorthotitanat (TBOT) haben gegenüber den in der Literatur häufig verwendeten Zinn-, Antimon-, Kobalt- und Bleikatalysatoren wie beispielsweise Zinndioctanoat den Vorteil, dass im Produkt verbleibende Restmengen des Katalysators oder Folgeprodukt des Katalysators weniger toxisch sind. Dieser Umstand ist bei den biologisch abbaubaren Polyestern besonders wichtig, da sie beispielsweise als Kompostierbeutel oder Mulchfolien unmittelbar in die Umwelt gelangen.

Die erfindungsgemäßen Polyester werden gegebenenfalls anschließend nach den in WO 96/15173 und EP-A 488 617 beschriebenen Verfahren kettenverlängert. Der Präpolyester wird beispielsweise mit Kettenverlängerern vib), wie mit Diisocyanaten oder mit epoxidhaltigen Polymethacrylaten in einer Kettenverlängerungsreaktion zu einem Polyester mit einer VZ von 60 bis 450 mUg, vorzugsweise 80 bis 250 mL/g umgesetzt.

Ein Gemisch der Dicarbonsäuren wird in Anwesenheit eines Überschusses an Diol zusammen mit dem Katalysator in der Regel zunächst kondensiert. Anschließend wird die Schmelze des so erhaltenen Präpolyesters üblicherweise bei einer Innentemperatur von 200 bis 250°C innerhalb von 3 bis 6 Stunden bei vermindertem Druck unter Abdestillieren freiwerdenden Diols bis zur gewünschten Viskosität mit einer Viskositätszahl (VZ) von 60 bis 450 mL/g und vorzugsweise 80 bis 250 mL/g kondensiert.

Besonders bevorzugt werden die erfindungsgemäßen Polyester nach dem in WO09/127556 beschriebenen kontinuierlichen Verfahren hergestellt. Die obengenannten Viskositätszahlbereiche dienen lediglich als Anhaltspunkte für bevorzugte Verfahrensvarianten, sollen jedoch nicht beschränkend für den vorliegenden Anmeldegegenstand gelten.

Neben dem oben beschriebenen kontinuierlichen Verfahren können die erfindungsgemäßen Polyester auch in einem Batch-Prozess hergestellt werden. Hierzu werden das aliphatische und das aromatische Dicarbonsäurederivat,das Diol und ein Verzweiger in beliebiger Dosierreihenfolge gemischt und zu einem Präpolyester kondensiert. Gegebenenfalls unter Zuhilfenahme eines Kettenverlängerers kann ein Polyester mit der gewünschten Viskositätszahl eingestellt werden.

Mit den obengenannten Verfahren sind beispielsweise Polybutylenterephthaltsuccinate, -azelate, -brassylate und insbesondere -adipate und -sebacate erhältlich mit einer Säurezahl gemessen nach DIN EN 12634 von kleiner als 1,0 mg KOH/g und einer Viskositätszahl von größer 130 mL/g, sowie einer MVR nach ISO 1133 von kleiner 6 cm³/10 min (190°C, 2,16 kg Gewicht). Diese Produkte sind insbesondere für Folienanwendungen interessant.

Für andere Anwendungen können erfindungsgemäße Polyester mit höheren MVR nach ISO 1133 von bis zu 30 cm³/10 min (190°C, 2,16 kg Gewicht) interessant sein. Die Polyester weisen in der Regel einen MVR nach ISO 1133 von 1 bis 30 cm³/10 min und vorzugsweise 2 bis 20 cm³/10 min (190°C, 2,16 kg Gewicht) auf.

Sebacinsäure, Azelainsäure und Brassylsäure (i) sind aus nachwachsenden Rohstoffen, insbesondere aus Pflanzenölen wie z.B. Rizinusöl zugänglich.

Die Terephthalsäure ii wird in 20 bis 35 mol-%, bezogen auf die Disäurekomponenten i und ii eingesetzt.

Terephthalsäure und die aliphatische Dicarbonsäure können entweder als freie Säure oder in Form esterbildender Derivate eingesetzt werden. Als esterbildende Derivate sind insbesondere die Di-C₁- bis C₆-Alkylester, wie Dimethyl-, Diethyl-, Di-n-propyl, Diisopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildende Derivate, einzeln oder als Gemisch eingesetzt werden.

1,4-Butandiol ist ebenfalls aus nachwachsenden Rohstoffen zugänglich. WO 09/024294 offenbart ein biotechnologisches Verfahren zur Herstellung von 1,4-Butandiol ausgehend von unterschiedlichen Kohlehydraten mit Mikroorganismen aus der Klasse der *Pasteurellaceae.*

In der Regel wird zu Beginn der Polymerisation das Diol (Komponente iii) zu den Säuren (Komponenten i und ii) in einem Verhältnis von Diol zu Disäuren von 1,0 bis 2,5 : 1 und vorzugsweise 1,3 bis 2,2 : 1 eingestellt. Überschüssige Diolmengen werden während der Polymerisation abgezogen, sodass sich am Ende der Polymerisation ein ungefähr äquimolares Verhältnis einstellt. Unter ungefähr äquimolar wird ein Diol/Disäuren-Verhältnis von 0,98 bis 1,02 : 1 verstanden.

Die genannten Polyester können Hydroxy- und/oder Carboxylendgruppen in jedem beliebigen Verhältnis aufweisen. Die genannten teilaromatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden. Bevorzugt sind Polyester mit Säurezahlen kleiner als 1,5 mg KOH/g.

In der Regel werden ein Vernetzer iva und gegebenenfalls zusätzlich ein Kettenverlängerer ivb ausgewählt aus der Gruppe bestehend aus: einem polyfunktionellen Isocyanat, Isocyanurat, Oxazolin, Epoxid, Carbonsäureanhydrid, einem mindestens trifunktionellen Alkohol oder einer mindestens trifunktionellen Carbonsäure eingesetzt. Als Kettenverlängerer ivb kommen polyfunktionelle und insbesondere difunktionelle Isocyanate, Isocyanurate, Oxazoline, Carbonsäureanhydrid oder Epoxide in Frage. Die Vemetzer iva) werden in der Regel in einer Konzentration von 0,05 bis 2 Gew.-%, vorzugsweise 0,07 bis 1 Gew.-% und insbesondere bevorzugt 0,1 bis 0,5 Gew.-% bezogen auf das Polymer erhältlich aus den Komponenten i bis iii eingesetzt. Die Kettenverlängerer ivb) werden im Allgemeinen in einer Konzentration von 0,01 bis 2 Gew.-%, vorzugsweise 0,1 bis 1 Gew.-% und insbesondere bevorzugt 0,35 bis 2 Gew.-% bezogen auf das Gesamtgewicht der Komponenten i bis iii eingesetzt.

Kettenverlängerer sowie Alkohole oder Carbonsäurederivate mit mindestens drei funktionellen Gruppen können auch als Vernetzer aufgefasst werden. Besonders bevorzugte Verbindungen haben drei bis sechs funktionelle Gruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Komponenten iv lassen sich biologisch abbaubare Polyester mit einer strukturellen Viskosität aufbauen. Das rheologische Verhalten der Schmelzen verbessert sich; die biologisch abbaubaren Polyester lassen sich leichter verarbeiten, beispielsweise besser durch Schmelzeverfestigung zu Folien ausziehen. Die Verbindungen iv wirken scherentzähend, d.h. die Viskosität unter Belastung wird geringer.

In der Regel ist es sinnvoll die vernetzenden (mindestens trifunktionellen) Verbindungen zu einem früheren Zeitpunkt der Polymerisation zuzugeben.

Als bifunktionelle Kettenverlängerer eignen sich die folgenden Verbindungen:
Unter einem aromatischen Diisocyanat ivb werden vor allem Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylen-diisocyanat verstanden. Darunter werden 2,2'-, 2,4'- sowie 4,4'-Diphenylmethandiisocyanat besonders bevorzugt. Im Allgemeinen werden letztere Diisocyanate als Mischung eingesetzt. In untergeordneten Mengen, z.B. bis zu 5 Gew.-%, bezogen auf das Gesamtgewicht können die Diisocyanate auch Uretdiongruppen, beispielsweise zum Verkappen der Isocyanatgruppen, enthalten.

Unter einem aliphatischen Diisocyanat werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclohexan), verstanden. Besonders bevorzugte aliphatische Diisocyanate sind Isophorondiisocyanat und insbesondere 1,6-Hexamethylendiisocyanat.

Die erfindungsgemäßen Polyester weisen in der Regel ein zahlenmittleres Molekulargewicht (Mn) im Bereich von 5000 bis 100000, insbesondere im Bereich von 10000 bis 60000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 30 und 450, vorzugsweise von 50 bis 400 mL/g und insbesondere bevorzugt von 80 bis 250 mL/g (gemessen in o-Dichlorbenzol/Phenol (Gewichtsverhältnis 50/50)). Der Schmelzpunkt liegt im Bereich von 85 bis 150, bevorzugt im Bereich von 95 bis 140°C.

In einer bevorzugten Ausführungsform werden 1 bis 80 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl, zerkleinertem Kork, gemahlenen Rinden, Nussschalen, gemahlene Presskuchen (Pflanzenölraffinerie), getrocknete Produktionsrückstände aus der Fermentation oder Destillation von Getränken wie z.B. Bier, gebrauten Limonaden (z.B. Bionade), Wein oder Sake und/oder eines anorganischen Füllstoffs ausgewählt aus der Gruppe bestehend aus: Kreide, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorillonite, Talkum, Glasfasern und Mineralfasern zugesetzt.

Stärke und Amylose können nativ, d.h. nicht thermoplastifiziert oder mit Weichmachern wie beispielsweise Glycerin oder Sorbit thermoplastifiziert sein (EP-A 539 541, EP-A 575 349, EP 652 910).

Unter Naturfasern werden zum Beispiel Cellulosefasern, Hanffasern, Sisal, Kenaf, Jute, Flax, Abacca, Kokosfaser oder aber auch Regeneratcellulosefasern (Rayon) wie z. B. Cordenkafasern verstanden.

Als bevorzugte faserförmige Füllstoffe seien Glasfasern, Kohlenstofffasern, AramidFasern, Kaliumtitanat-Fasern und Naturfasern genannt, wobei Glasfasern als E-Glas besonders bevorzugt sind. Diese können als Rovings oder insbesondere als Schnittglas in den handelsüblichen Formen eingesetzt werden. Diese Fasern weisen im Allgemeinen einen Durchmesser von 3 bis 30µm, bevorzugt 6 bis 20µm und besonderes bevorzugt von 8 bis 15µm auf. Die Faserlänge im Compound beträgt in der Regel 20µm bis 1000µm, bevorzugt 180 bis 500µm und besonderes bevorzugt 200 bis 400µm.

Die faserförmigen Füllstoffe können zur besseren Verträglichkeit mit dem Thermoplasten zum Beispiel mit einer Silanverbindung oberflächlich vorbehandelt sein.

Die biologisch abbaubaren Polyester bzw. Polyestermischungen können weitere dem Fachmann bekannte, aber nicht erfindungswesentliche Inhaltsstoffe enthalten. Beispielsweise die in der Kunststofftechnik üblichen Zusatzstoffe wie Stabilisatoren; Nukleierungsmittel; Neutralisationsmittel; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Bienenwachs oder Bienenwachsester; Antistatikum, UV-Absorbers; UV-Stabilisators; Antifog-Mittel oder Farbstoffe. Die Additive werden in Konzentrationen von 0 bis 5 Gew.-%, insbesondere 0,1 bis 2 Gew.-% bezogen auf die erfindungsgemäßen Polyester eingesetzt. Weichmacher können in 0,1 bis 10 Gew.-% in den erfindungsgemäßen Polyestern enthalten sein.

Die Herstellung der erfindungsgemäßen biologisch abbaubaren Polyestermischungen aus den einzelnen Komponenten kann nach bekannten Verfahren erfolgen (EP 792 309 und US 5,883,199). Beispielsweise können alle Mischungspartner in einem Verfahrensschritt in dem Fachmann bekannten Mischvorrichtungen, beispielsweise Knetern oder Extrudern bei erhöhten Temperaturen, beispielsweise von 120°C bis 250°C, gemischt und zur Reaktion gebracht werden.

Typische Polyestermischungen zur Folienherstellung enthalten:
a) 5 bis 30 Gew.-%, vorzugsweise 8 bis 20 Gew.-% eines biologisch abbaubaren Polyesters a) gemäß Anspruch 1 und
b) 95 bis 70 Gew.-%, vorzugsweise 92 bis 80 Gew.-% eines biologisch abbaubaren, aliphatisch-aromatischen Polyesters b) erhältlich durch Polykondensation von:
   i) 40 bis 60 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
   ii) 60 bis 40 mol %, bezogen auf die Komponenten i bis ii, eines Terephthalsäurederivats;
   iii) 98 bis 102 mol %, bezogen auf die Komponenten i bis ii, eines C₂-C₈-Alkylendiols oder C₂-C₆-Oxyalkylendiols;
   iv) 0 bis 2 Gew.-%, bezogen auf das Polymer erhältlich aus den Komponenten i bis iii, eines mindestens trifunktionellen Vernetzers oder eines mindestens difunktionellen Kettenverlängerers.

Bevorzugt eingesetzt zur Folienherstellung werden Polyestermischungen enthaltend die Polymerkomponenten a), b) und c):
a) 5 bis 30 Gew.-%, vorzugsweise 8 bis 20 Gew.-% eines biologisch abbaubaren Polyesters a) gemäß Anspruch 1 und
b) 90 bis 20 Gew.-%, bevorzugt 80 bis 20 und vorzugsweise 77 bis 45 Gew.-% eines biologisch abbaubaren, aliphatisch-aromatischen Polyesters b) erhältlich durch Polykondensation von:
   i) 40 bis 60 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
   ii) 60 bis 40 mol %, bezogen auf die Komponenten i bis ii, eines Terephthalsäurederivats;
   iii) 98 bis 102 mol %, bezogen auf die Komponenten i bis ii, eines C₂-C₈-Alkylendiols oder C₂-C₆-Oxyalkylendiols;
   iv) 0 bis 2 Gew.-%, bezogen auf das Polymer erhältlich aus den Komponenten i bis iii, eines mindestens trifunktionellen Vernetzers oder eines mindestens difunktionellen Kettenverlängerers;
c) 5 bis 50 Gew.-%, bevorzugt 15 bis 50 und vorzugsweise 15 bis 35 Gew.-%, eines oder mehrerer Polymere ausgewählt aus der Gruppe bestehend aus: Polymilchsäure, Polycaprolacton, Polyhydroxyalkanoat, Polyalkylencarbonat, Chitosan und Gluten und eines oder mehrerer Polyester auf Basis von aliphatischen Diolen und aliphatischen Dicarbonsäuren - und
   0 bis 2 Gew.-% eines Verträglichkeitsvermittlers.

Die vorgenannten Polyestermischungen enthaltend die Komponenten a) und b) bzw. a), b) und c) eigenen sich hervorragend für Folienanwendungen wie Einkaufstüten, Abfallbeutel usw..

Vorzugsweise enthalten die Polymermischungen ihrerseits 0,05 bis 2 Gew.-% eines Verträglichkeitsvermittlers. Bevorzugte Verträglichkeitsvermittler sind Carbonsäureanhydride wie Maleinsäureanhydrid und insbesondere die zuvor beschriebenen epoxidgruppen-haltige Copolymere auf Basis Styrol, Acrylsäureester und/oder Methacrylsäureester. Die Epoxidgruppen tragenden Einheiten sind vorzugsweise Glycidyl(meth)-acrylate. Epoxidgruppen-haltige Copolymere des obengenannten Typs werden beispielsweise von der BASF Resins B.V. unter der Marke Joncryl^{®} ADR vertrieben. Als Verträglichkeitsvermittler besonders geeignet ist beispielsweise Joncryl^{®} ADR 4368.

Unter teilaromatischen (aliphatisch-aromatischen) Polyestern auf Basis von aliphatischen Diolen und aliphatisch/aromatischen Dicarbonsäuren (Komponente b) werden auch Polyesterderivate verstanden wie Polyetherester, Polyesteramide oder Polyetheresteramide. Zu den geeigneten teilaromatischen Polyestern gehören lineare nicht kettenverlängerte Polyester (WO 92/09654). Insbesondere sind aliphatisch/aromatische Polyester aus Butandiol, Terephthalsäure und aliphatischen C₆-C₁₈-Dicarbonsäuren wie Adipinsäure, Korksäure, Azelainsäure, Sebacinsäure und Brassylsäure (beispielsweise wie in WO 2006/097353 bis 56 beschrieben) geeignete Mischungspartner. Bevorzugt werden kettenverlängerte und/oder verzweigte teilaromatische Polyester. Letztere sind aus den eingangs genannten Schriften WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht. Insbesondere sind unter teilaromatischen Polyestern Produkte wie Ecoflex^{®} (BASF SE), Eastar^{®} Bio und Origo-Bi^{®} (Novamont) zu verstehen. Sie weisen einen im Vergleich zu den biologisch abbaubaren Polyestern des Anspruchs 1 einen höheren Terephthalsäuregehalt (aromatische Dicarbonsäure) auf.

Als biologisch abbaubaren Polyester (Komponente c) ist vorzugsweise Polymilchsäure geeignet. Polymilchsäure mit dem folgenden Eigenschaftsprofil wird bevorzugt eingesetzt:
- einer Schmelzvolumenrate (MVR bei 190°C und 2.16 kg nach ISO 1133 von 0.5 bis 30, vorzugweise 2 bis 18 ml/10 Minuten)
- einem Schmelzpunkt unter 240°C;
- einem Glaspunkt (Tg) größer 55°C
- einem Wassergehalt von kleiner 1000 ppm
- einem Monomeren-Restgehalt (Lactid) von kleiner 0.3 %.
- einem Molekulargewicht von größer 80 000 Dalton.

Bevorzugte Polymilchsäuren sind beispielsweise NatureWorks® 3001, 3051, 3251, 4020, 4032 oder 4042D (Polymilchsäure der Fa. NatureWorks oder NL-Naarden und USA Blair/Nebraska).

Unter Polyhydroxyalkanoaten werden in erster Linie Poly-4-hydroxybutyrate und Poly-3-hydroxybutyrate verstanden, weiterhin sind Copolyester der vorgenannten Hydroxybutyrate mit 3-Hydroxyvaleraten oder 3-Hydroxyhexanoat umfasst. Poly-3-hydroxy-butyrate-co-4-hydroxybutyrate sind insbesondere von der Fa. Metabolix bekannt. Sie werden unter dem Handelsnamen Mirel® vertrieben. Poly-3-hydroxybutyrate-co-3-hydroxyhexanoate sind von der Fa. P&G oder Kaneka bekannt. Poly-3-hydroxybutyrate werden beispielsweise von der Fa. PHB Industrial unter dem Markennamen Biocycle® und von der Fa. Tianan unter dem Namen Enmat® vertrieben.

Die Polyhydroxyalkanoate weisen in der Regel ein Molekulargewicht Mw von 100.000 bis 1.000.000 und vorzugsweise von 300.000 bis 600.000 auf.

Polycaprolacton wird von der Fa. Daicel unter dem Produktnamen Placcel^{®} vermarktet.

Unter Polyalkylencarbonaten werden insbesondere Polyethylencarbonat und Polypropylencarbonat verstanden.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester-(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 (Bezug nehmend auf ISO 14855) CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Die eingangs genannten biologisch abbaubaren Polyester und Polyestermischungen sind zur Herstellung von Folien und Folienbändchen für Netze und Gewebe, Schlauchfolien, Chill-Roll-Folien mit und ohne einer Orientierung in einem weiteren Verfahrensschritt, mit und ohne Metallisierung oder SiOx-Beschichtung geeignet.

Insbesondere lassen sich die Polyestermischungen enthaltend die Komponenten a) und b) bzw. a), b) und c) zu Schlauchfolien und Stretchfolien weiterverarbeiten. Mögliche Anwendungen sind hier Bodenfaltbeutel, Seitennahtbeutel, Tragetaschen mit Griffloch, Schrumpfetiketten oder Hemdchentragetaschen, Inliner, Schwergutsäcke, Gefrierbeutel, Kompostierbeutel, Landwirtschaftsfolien (Mulchfilme), Folienbeutel zur Verpackung von Nahrungsmitteln, abziehbare Verschlussfolie - transparent oder undurchsichtig - schweißbare Verschlussfolie - transparent oder undurchsichtig - , Wursthülle, Salatfolie, Frischhaltefolie (Stretchfolie) für Obst und Gemüse, Fleisch und Fisch, Stretchfolie zum Einschlagen von Paletten, Folie für Netze, Verpackungsfolien für Snacks, Schoko- und Müsliriegel, peelbare Deckelfolien für Molkereiverpackungen (Joghurt, Sahne etc.), Obst und Gemüse, halbharte Verpackungen für geräucherte Wurst und Käse.

Aufgrund ihrer für biologisch abbaubare Folien hervorragenden Barriereeigenschaften gegenüber Sauerstoff und Aromen sind die genannten Polyester und Polymermischungen prädestiniert zum Verpacken von Fleisch, Geflügel, Fleischprodukten, verarbeitetem Fleisch, Würstchen, geräucherter Wurst, Meeresfrüchten, Fisch, Krebsfleisch, Käse, Käseprodukten, Desserts, Pasteten z. B. mit Fleisch-, Fisch-, Geflügel-, Tomatenfüllung, Pasten und Brotaufstrichen; Brot, Kuchen, andere Backwaren; Obst, Obstsäfte, Gemüse, Tomatenmark, Salate; Tiernahrung; pharmazeutische Produkte; Kaffee, kaffeeartige Produkte; Milch- oder Kakaopulver, Kaffeeweißer, Babynahrung; getrocknete Nahrungsmittel; Marmeladen und Gelees; Brotaufstriche, Schokocreme; Fertiggerichte. Weitere Informationen siehe Referenz in "Food Processing Handbook", James G. Brennan, Wiley-VCH, 2005.

Die Polymermischungen enthaltend Polymerkomponente a) weisen nach der Extrusion zu ein- oder mehrlagigen Schlauch-, Cast- oder Pressfolien eine deutlich höhere Reißfestigkeit (gemäß EN ISO 6383-2:2004) auf verglichen mit Mischungen ohne Polymerkomponente a). Die Weiterreißfestigkeit ist eine sehr wichtige Produkteigenschaft vor allem im Bereich dünner (Schlauch-)folien für z.B. Biomüllbeutel oder dünnwandige Tragetaschen (z.B. Hemdchentragetaschen, Obstbeutel). Daneben ist sie von besonderer Bedeutung bei Mulchfolien im Agrarbereich.

Schrumpffolien zeichnen sich durch eine Schrumpfrate in Extrusionsrichtung der Schrumpffolie von mehr als 40 %, bevorzugt von mehr als 50 % und besonders bevorzugt von mehr als 60 % aus. Die Schrumpffolie hat in der senkrechten Richtung vergleichsweise niedrige Schrumpfwerte von kleiner 40 %, bevorzugt kleiner 25 % und besonders bevorzugt kleiner 15 %. Die Schrumpfwerte beziehen sich auf eine Erwärmung der Folie im Schrumpftunnel auf mindestens 10 °C bevorzugt mindestens 30 °C oberhalb der Glasübergangstemperatur. Besonders bevorzugt ist eine Erwärmung auf mindestens 50 °C (bevorzugt mindestens 30 °C) oberhalb der Schmelztemperatur des Folienmaterials, so dass die Folie beim Schrumpfvorgang auch verschweißt werden kann.

Aufgrund der schnellen Abbaubarkeit und der hervorragenden mechanischen Eigenschaften lassen sich Folienanwendungen realisieren, die auch in größeren Folienstärken (> 240 µm) die Normen der Kompostierbarkeit noch erfüllen.

Die biologisch abbaubaren Polyester und Polyestermischungen haben zudem sehr gute Hafteigenschaften. Dadurch eignen sie sich hervorragend zur Papierbeschichtung z.B. für Pappbecher und Pappteller. Für deren Herstellung eignet sich sowohl die Extrusionsbeschichtung wie auch Laminierverfahren. Auch eine Kombination dieser Verfahren oder eine Beschichtung durch Besprühen, Rakeln oder Eintauchen ist denkbar.

### Anwendungstechnische Messungen:

Die Molekulargewichte Mn und Mw der teilaromatischen Polyester wurden gemäß DIN 55672-1 bestimmt Elutionsmittel Hexafluoroisopropanol (HFIP) + 0,05 Gew.-% Trifluoroessigsäure-Ka-Salz; Die Kalibrierung erfolgte mit eng verteilten Polymethylmethacrylat-Standards. Die Bestimmung der Viskositätszahlen erfolgte nach DIN 53728 Teil 3, 3. Januar 1985, Kapillarviskosimetrie. Zum Einsatz kam ein Mikro-Ubbelohde Viskosimeter, Typ M-II. Als Lösungsmittel wurde das Gemisch: Phenol/o-Dichlorbenzol im Gewichtsverhältnis 50/50 verwendet.

Der E-Modul und die Reißdehnung wurden mittels eines Zugversuchs an Pressfolien mit einer Dicke von etwa 420 µm gemäß ISO 527-3 : 2003 bestimmt.

Die Weiterreißfestigkeit wurde durch einen Elmendorf-Test gemäß EN ISO 6383-2:2004 bestimmt an Prüfkörpern mit konstantem Radius (43 mm Risslänge) bestimmt.

In einem Puncture Resistance Test an Pressfolien mit einer Dicke von 420 µm wurde die maximale Kraft und die Brucharbeit der Polyester gemessen:
Bei der verwendeten Prüfmaschine handelt es sich um ein Zwick 1120 ausgerüstet mit einem kugelförmigen Stempel mit einem Durchmesser von 2,5 mm. Die Probe, ein kreisförmiges Stück der zu vermessenden Folie, wurde senkrecht zum Prüfstempel eingespannt und dieser mit einer konstanten Prüfgeschwindigkeit von 50 mm/min durch die Ebene, die durch die Einspannvorrichtung aufgespannt wird, hindurch gefahren. Während des Versuchs wurde sowohl die Kraft wie auch die Dehnung aufgezeichnet und so die Durchstoßarbeit bestimmt.

Die Abbauraten der biologisch abbaubaren Polyestermischungen und der zum Vergleich hergestellten Mischungen wurden wie folgt bestimmt:
Aus den biologisch abbaubaren Polyestermischungen und den zum Vergleich hergestellten Mischungen wurden durch Pressen bei 190°C jeweils Folien mit einer Dicke von 30 µm hergestellt. Diese Folien wurden jeweils in rechteckige Stücke mit Kantenlängen von 2 x 5 cm geschnitten. Das Gewicht dieser Folienstücke wurde jeweils bestimmt und als "100 Gew.-%" definiert. Über einen Zeitraum von vier Wochen wurden die Folienstücke in einem Trockenschrank in einer mit befeuchteter Komposterde gefüllten Kunststoffdose auf 58°C erhitzt. Im Wochenabstand wurde jeweils das verbleibende Gewicht der Folienstücke gemessen und auf Gew.-% (bezogen auf das zu Versuchsbeginn ermittelte und als "100 Gew.-%" definierte Gewicht) umgerechnet.

### Einsatzstoffe:

Polyester A1
   ein Polybutylenterephthalatadipat, das wie folgt hergestellt wurde: 110,1 g Dimethylterephthalat (27 mol %), 224 g Adipinsäure (73 mol %), 246 g 1,4-Butandiol (130 mol %) und 0,34 ml Glycerin (0,1 Gew.-% bezogen auf das Polymer) wurden zusammen mit 0,37 ml Tetrabutylorthotitanat (TBOT) gemischt, wobei das Molverhältnis zwischen Alkoholkomponenten und Säurekomponente 1,30 betrug. Das Reaktionsgemisch wurde auf eine Temperatur von 210°C erhitzt und bei dieser Temperatur 2h lang gehalten. Anschließend wurde die Temperatur auf 240°C erhöht und schrittweise evakuiert. Die überschüssige Dihydroxyverbindung wurde unter einem Vakuum von kleiner 1 mbar über einen Zeitraum von 3h abdestilliert. Der so erhaltene Polyester A1 wies einen Schmelzpunkt von 60°C und eine VZ von 156 ml/g auf.
Polyester A2
   ein Polybutylenterephthalatadipat, das wie folgt hergestellt wurde: 583,3 g Dimethylterephthalat (27 mol %), 1280,2 g Adipinsäure (73 mol %), 1405,9 g 1,4-Butandiol (130 mol %) und 37 g Glycerin (1,5 Gew.-% bezogen auf das Polymer) wurden zusammen mit 1 g Tetrabutylorthotitanat (TBOT) gemischt, wobei das Molverhältnis zwischen Alkoholkomponenten und Säurekomponente 1,30 betrug. Das Reaktionsgemisch wurde auf eine Temperatur von 210°C erhitzt und bei dieser Temperatur 2h lang gehalten. Anschließend wurde die Temperatur auf 240°C erhöht und schrittweise evakuiert. Die überschüssige Dihydroxyverbindung wurde unter einem Vakuum von kleiner 1 mbar über einen Zeitraum von 2h abdestilliert. Der so erhaltene Polyester A2 wies einen Schmelzpunkt von 60°C und eine VZ von 146 ml/g auf.
Polyester A3
   ein Polybutylenterephthalatadipat, das wie folgt hergestellt wurde: 697,7 g Terephthalsäure (35 mol %), 1139,9 g Adipinsäure (65 mol %), 1405,9 g 1,4-Butandiol (130 mol %) und 37,3 ml Glycerin (1,5 Gew.-% bezogen auf das Polymer) wurden zusammen mit 2,12 ml Tetrabutylorthotitanat (TBOT) gemischt, wobei das Molverhältnis zwischen Alkoholkomponenten und Säurekomponente 1,30 betrug. Das Reaktionsgemisch wurde auf eine Temperatur von 210°C erhitzt und bei dieser Temperatur 2h lang gehalten. Anschließend wurde die Temperatur auf 240°C erhöht und schrittweise evakuiert. Die überschüssige Dihydroxyverbindung wurde unter einem Vakuum von kleiner 1 mbar über einen Zeitraum von 2h abdestilliert. Der so erhaltene Polyester A3 wies einen Schmelzpunkt von 80°C (breit) und eine VZ von 191 ml/g auf.
Polyester A4
   ein Polybutylenterephthalatadipat, das wie folgt hergestellt wurde: 726,8 g Terephthalsäure (35 mol %), 1187,4 g Adipinsäure (65 mol %), 1464,5 g 1,4-Butandiol (130 mol %) und 372,06 ml Glycerin (0,1 Gew.-% bezogen auf das Polymer) wurden zusammen mit 2,21 ml Tetrabutylorthotitanat (TBOT) gemischt, wobei das Molverhältnis zwischen Alkoholkomponenten und Säurekomponente 1,30 betrug. Das Reaktionsgemisch wurde auf eine Temperatur von 210°C erhitzt und bei dieser Temperatur 2h lang gehalten. Anschließend wurde die Temperatur auf 240°C erhöht und schrittweise evakuiert. Die überschüssige Dihydroxyverbindung wurde unter Vakuum von kleiner 1 mbar über einen Zeitraum von 3h abdestilliert. Der so erhaltene Polyester A4 wies einen Schmelzpunkt von 80°C und eine VZ von 157 ml/g auf.
Polyester B1
   ein Polybutylenterephthalatadipat, das wie folgt hergestellt wurde: 87,3 kg Dimethylterephthalat (44 mol %), 80,3 kg Adipinsäure (56 mol %), 117 kg 1,4-Butandiol und 0,2 kg Glycerin (0,1 Gew.-% bezogen auf das Polymer) wurden zusammen mit 0,028 kg Tetrabutylorthotitanat (TBOT) gemischt, wobei das Molverhältnis zwischen Alkoholkomponenten und Säurekomponente 1,30 betrug. Das Reaktionsgemisch wurde auf eine Temperatur von 180°C erhitzt und bei dieser Temperatur 6h lang umgesetzt. Anschließend wurde die Temperatur auf 240°C erhöht und die überschüssige Dihydroxyverbindung unter Vakuum über einen Zeitraum von 3h abdestilliert. Anschließend wurden bei 240°C 0,9 kg Hexamethylendiisocyanat innerhalb 1 h langsam zudosiert. Der so erhaltene Polyester B1 wies eine Schmelztemperatur von 119°C und ein Molekulargewicht (Mₙ) von 23000 g/mol, Molekulargewicht (M_{w}) von 130000 g/mol auf.
Polyester C1
   Polymilchsäure der Fa. NatureWorks 4042D®
Vertäglichkeitsvermittler D1
   Joncryl ADR 4368CS

### Beispiele:

### Beispiele 1 bis 4 und Vergleichsbeispiel 1- Polybutylenterephthalat-adipat -

Die in Tabelle 1) angegebenen Anteile an den Polyestern A1, A2, B1, C1 und dem Verträglichkeitsvermittler D1 wurden in einem Miniextruder der Fa. DSM bei 200 °C für 5 min gemischt. Aus dem extrudierten Strang wurden bei 205-215 °C Pressfolien mit einer Dicke von 110 µm hergestellt und auf Weiterreißfestigkeit gemäß EN ISO 6383-2:2004 analysiert.

**Tabelle 1:**

| Zusammensetzung der Folie [Gew.-%] | Bsp 1 | Bsp. 2 | Bsp. 3 | Bsp. 4 | Vgl-bsp 1 |
|---|---|---|---|---|---|
| A1 | 10 | 20 | 0 | 0 | 0 |
| A2 | 0 | 0 | 10 | 20 | 0 |
| B1 | 61 | 54,2 | 61 | 54,2 | 67,8 |
| C1 | 28,8 | 25,6 | 28,8 | 25,6 | 32 |
| D1 | 0,2 | 0,2 | 0,2 | 0,2 | 0,2 |
| | | | | | |
| Weiterreißfestigkeit [mN] | 10312 | 11887 | 7864 | 5840 | 5766 |

Wie man erkennen kann erhöht der Zusatz der Polyesterkomponente a) in den Beispielen 1 bis 4 die Weiterreißfestigkeit gegenüber dem Vergleichsbeispiel 1 signifikant. Besonders bevorzugt ist die Verwendung des erfindergemäßen Polyesters mit einem niedrigeren Anteil an trifunktionellem Vernetzer.

## Patentansprüche

1. Verfahren zur Herstellung von weiterreißfesten Folien unter Verwendung der Polymerkomponenten a) und b):
a) 5 bis 30 Gew.-% eines biologisch abbaubaren Polyesters a erhältlich durch Polykondensation von:
i) 65 bis 80 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 35 bis 20 mol %, bezogen auf die Komponenten i bis ii, eines Terephthalsäurederivats;
iii) 98 bis 102 mol %, bezogen auf die Komponenten i bis ii, eines C₂-C₈-Alkylendiols oder C₂-C₆-Oxyalkylendiols;
iv) 0,05 bis 2 Gew.-%, bezogen auf das Polymer erhältlich aus den Komponenten i bis iii, eines mindestens trifunktionellen Vernetzers oder difunktionellen Kettenverlängerers;
und
b) 95 bis 70 Gew.-% eines biologisch abbaubaren, aliphatisch-aromatischen Polyesters b erhältlich durch Polykondensation von:
i) 40 bis 60 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 60 bis 40 mol %, bezogen auf die Komponenten i bis ii, eines Terephthalsäurederivats;
iii) 98 bis 102 mol %, bezogen auf die Komponenten i bis ii, eines C₂-C₈-Alkylendiols oder C₂-C₆-Oxyalkylendiols und
iv) 0 bis 2 Gew.-%, bezogen auf das Polymer erhältlich aus den Komponenten i bis iii, eines mindestens trifunktionellen Vernetzers oder difunktionellen Kettenverlängerers.

2. Verfahren nach Anspruch 1, wobei der Vernetzer in Komponente a Glycerin ist.

3. Verfahren nach Anspruch 1, wobei als Dicarbonsäure in Komponente a Adipinsäure und/oder Sebazinsäure eingesetzt wird.

4. Verfahren zur Herstellung von weiterreißfesten Folien unter Verwendung der Polymerkomponenten a), b) und c):
a) 5 bis 30 Gew.-% eines biologisch abbaubaren Polyesters a gemäß Anspruch 1 und
b) 90 bis 20 Gew.-% eines biologisch abbaubaren, aliphatisch-aromatischen Polyesters b erhältlich durch Polykondensation von:
i) 40 bis 70 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 60 bis 30 mol %, bezogen auf die Komponenten i bis ii, eines Terephthalsäurederivats;
iii) 98 bis 102 mol %, bezogen auf die Komponenten i bis ii, eines C₂-C₈-Alkylendiols oder C₂-C₆-Oxyalkylendiols;
iv) 0 bis 2 Gew.-%, bezogen auf das Polymer erhältlich aus den Komponenten i bis iii, eines mindestens trifunktionellen Vernetzers oder difunktionellen Kettenverlängerers;
c) 5 bis 50 Gew.-%, eines oder mehrerer Polymere ausgewählt aus der Gruppe bestehend aus: Polymilchsäure, Polycaprolacton, Polyhydroxyalkanoat, Polyalkylencarbonat, Chitosan und Gluten und eines oder mehrerer Poly-ester auf Basis von aliphatischen Diolen und aliphatischen Dicarbonsäuren - und
0 bis 2 Gew.-% eines Verträglichkeitsvermittlers.

5. Verfahren nach Anspruch 4, wobei die Mischungen 0,05 bis 2 Gew.-% eines epoxidhaltigen Poly(meth)acrylats als Verträglichkeitsvermittler enthalten.

6. Verfahren nach Anspruch 4, wobei die Komponente c) Polymilchsäure ist.

7. Polymermischungen enthaltend:
a) 5 bis 30 Gew.-% eines biologisch abbaubaren Polyesters a enthaltend:
i) 65 bis 80 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure,
ii) 35 bis 20 mol %, bezogen auf die Komponenten i bis ii, eines Terephthalsäurederivats;
iii) 98 bis 102 mol %, bezogen auf die Komponenten i bis ii, eines C₂-C₈-Alkylendiols oder C₂-C₆-Oxyalkylendiols;
iv) 0,05 bis 2 Gew.-%, bezogen auf das Polymer erhältlich aus den Komponenten i bis iii, eines mindestens trifunktionellen Vernetzers oder difunktionellen Kettenverlängerers;
b) 80 bis 20 Gew.-% eines biologisch abbaubaren, aliphatisch-aromatischen Polyesters b erhältlich durch Polykondensation von:
i) 40 bis 60 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 60 bis 40 mol %, bezogen auf die Komponenten i bis ii, eines Terephthalsäurederivats;
iii) 98 bis 102 mol %, bezogen auf die Komponenten i bis ii, eines C₂-C₈-Alkylendiols oder C₂-C₆-Oxyalkylendiols;
c) 15 bis 50 Gew.-%, eines oder mehrerer Polymere ausgewählt aus der Gruppe bestehend aus: Polymilchsäure, Polycaprolacton, Polyhydroxyalkanoat, Polyalkylencarbonat, Chitosan und Gluten und eines oder mehrerer Polyester auf Basis von aliphatischen Diolen und aliphatischen Dicarbonsäuren - und
0 bis 2 Gew.-% eines Vertraglichkeitsvermittlers

## Claims

1. A process for producing films which are resistant to tear propagation, by using polymer components a) and b) :
a) from 5 to 30% by weight of a biodegradable polyester a obtainable via polycondensation of:
i) from 65 to 80 mol%, based on components i to ii, of one or more dicarboxylic acid derivatives or dicarboxylic acids selected from the group consisting of: succinic acid, adipic acid, sebacic acid, azelaic acid, and brassylic acid;
ii) from 35 to 20 mol%, based on components i to ii, of a terephthalic acid derivative;
iii) from 98 to 102 mol%, based on components i to ii, of a C₂-C₈-alkylenediol or C₂-C₆-oxyalkylenediol;
iv) from 0.05 to 2% by weight, based on the polymer obtainable from components i to iii, of an at least trifunctional crosslinking agent or difunctional chain extender;
and
b) from 95 to 70% by weight of a biodegradable, aliphatic-aromatic polyester b obtainable via polycondensation of:
i) from 40 to 60 mol%, based on components i to ii, of one or more dicarboxylic acid derivatives or dicarboxylic acids selected from the group consisting of: succinic acid, adipic acid, sebacic acid, azelaic acid, and brassylic acid;
ii) from 60 to 40 mol%, based on components i to ii, of a terephthalic acid derivative;
iii) from 98 to 102 mol%, based on components i to ii, of a C₂-C₈-alkylenediol or C₂-C₆-oxyalkylenediol;
iv) from 0 to 2% by weight, based on the polymer obtainable from components i to iii, of an at least trifunctional crosslinking agent or difunctional chain extender.

2. The process according to claim 1, where the crosslinking agent in component a is glycerol.

3. The process according to claim 1, where adipic acid and/or sebacic acid is used as dicarboxylic acid in component a.

4. A process for producing films which are resistant to tear propagation, by using polymer components a), b), and c):
a) from 5 to 30% by weight of a biodegradable polyester a according to claim 1 and
b) from 90 to 20% by weight of a biodegradable, aliphatic-aromatic polyester b obtainable via polycondensation of:
i) from 40 to 70 mol%, based on components i to ii, of one or more dicarboxylic acid derivatives or dicarboxylic acids selected from the group consisting of: succinic acid, adipic acid, sebacic acid, azelaic acid, and brassylic acid;
ii) from 60 to 30 mol%, based on components i to ii, of a terephthalic acid derivative;
iii) from 98 to 102 mol%, based on components i to ii, of a C₂-C₈-alkylenediol or C₂-C₆-oxyalkylenediol;
iv) from 0 to 2% by weight, based on the polymer obtainable from components i to iii, of an at least trifunctional crosslinking agent or difunctional chain extender;
c) from 5 to 50% by weight of one or more polymers selected from the group consisting of: polylactic acid, polycaprolactone, polyhydroxyalkanoate, polyalkylene carbonate, chitosan, and gluten, and of one or more polyesters based on aliphatic diols and on aliphatic dicarboxylic acids - and
from 0 to 2% by weight of a compatibilizer.

5. The process according to claim 4, where the mixtures comprise from 0.05 to 2% by weight of an epoxide-containing poly(meth)acrylate as compatibilizer.

6. The process according to claim 4, where component c) is polylactic acid.

7. A polymer mixture comprising:
a) from 5 to 30% by weight of a biodegradable polyester a comprising:
i) from 65 to 80 mol%, based on components i to ii, of one or more dicarboxylic acid derivatives or dicarboxylic acids selected from the group consisting of: succinic acid, adipic acid, sebacic acid, azelaic acid, and brassylic acid;
ii) from 35 to 20 mol%, based on components i to ii, of a terephthalic acid derivative;
iii) from 98 to 102 mol%, based on components i to ii, of a C₂-C₈-alkylenediol or C₂-C₆-oxyalkylenediol;
iv) from 0.05 to 2% by weight, based on the polymer obtainable from components i to iii, of an at least trifunctional crosslinking agent or difunctional chain extender;
b) from 80 to 20% by weight of a biodegradable, aliphatic-aromatic polyester b obtainable via polycondensation of:
i) from 40 to 60 mol%, based on components i to ii, of one or more dicarboxylic acid derivatives or dicarboxylic acids selected from the group consisting of: succinic acid, adipic acid, sebacic acid, azelaic acid, and brassylic acid;
ii) from 60 to 40 mol%, based on components i to ii, of a terephthalic acid derivative;
iii) from 98 to 102 mol%, based on components i to ii, of a C₂-C₈-alkylenediol or C₂-C₆-oxyalkylenediol;
c) from 15 to 50% by weight of one or more polymers selected from the group consisting of: polylactic acid, polycaprolactone, polyhydroxyalkanoate, polyalkylene carbonate, chitosan, and gluten, and of one or more polyesters based on aliphatic diols and on aliphatic dicarboxylic acids - and
from 0 to 2% by weight of a compatibilizer.

## Revendications

1. Procédé pour la fabrication de feuilles résistantes à la propagation d'une déchirure en utilisant les composants polymères a) et b) :
a) 5 à 30% en poids d'un polyester a biodégradable, pouvant être obtenu par polycondensation de :
i) 65 à 80% en mole, par rapport au composants i à ii, d'un ou de plusieurs dérivés d'acide dicarboxylique ou d'un ou de plusieurs acides dicarboxyliques choisis dans le groupe constitué par : l'acide succinique, l'acide adipique, l'acide sébacique, l'acide azélaïque et l'acide brassylique ;
ii) 35 à 20% en mole, par rapport aux composants i à ii, d'un dérivé d'acide téréphtalique ;
iii) 98 à 102% en mole, par rapport aux composants i à ii, d'une C₂-C₈-alkylènediol ou d'un C₂-C₆-oxyalkylènediol ;
iv) 0,05 à 2% en poids, par rapport au polymère pouvant être obtenu à partir des composants i à iii, d'un réticulant au moins trifonctionnel ou d'un agent d'allongement de chaîne difonctionnel ;
et
b) 95 à 70% en poids d'un polyester b biodégradable, aliphatique-aromatique pouvant être obtenu par polycondensation de :
i) 40 à 60% en mole, par rapport au composants i à ii, d'un ou de plusieurs dérivés d'acide dicarboxylique ou d'un ou de plusieurs acides dicarboxyliques choisis dans le groupe constitué par : l'acide succinique, l'acide adipique, l'acide sébacique, l'acide azélaïque et l'acide brassylique ;
ii) 60 à 40% en mole, par rapport aux composants i à ii, d'un dérivé d'acide téréphtalique ;
iii) 98 à 102% en mole, par rapport aux composants i à ii, d'une C₂-C₈-alkylènediol ou d'un C₂-C₆-oxyalkylènediol et
iv) 0 à 2% en poids, par rapport au polymère pouvant être obtenu à partir des composants i à iii, d'un réticulant au moins trifonctionnel ou d'un agent d'allongement de chaîne difonctionnel.

2. Procédé selon la revendication 1, où le réticulant dans le composant a est le glycérol.

3. Procédé selon la revendication 1, de l'acide adipique et/ou de l'acide sébacique étant utilisé comme acide dicarboxylique dans le composant a.

4. Procédé pour la fabrication de feuilles résistantes à la propagation d'une déchirure en utilisant les composants polymères a), b) et c) :
a) 5 à 30% en poids d'un polyester a biodégradable selon la revendication 1 et
b) 90 à 20% en poids d'un polyester b biodégradable, aliphatique-aromatique pouvant être obtenu par polycondensation de :
i) 40 à 70% en mole, par rapport au composants i à ii, d'un ou de plusieurs dérivés d'acide dicarboxylique ou d'un ou de plusieurs acides dicarboxyliques choisis dans le groupe constitué par : l'acide succinique, l'acide adipique, l'acide sébacique, l'acide azélaïque et l'acide brassylique ;
ii) 60 à 30% en mole, par rapport aux composants i à ii, d'un dérivé d'acide téréphtalique ;
iii) 98 à 102% en mole, par rapport aux composants i à ii, d'une C₂-C₈-alkylènediol ou d'un C₂-C₆-oxyalkylènediol ;
iv) 0 à 2% en poids, par rapport au polymère pouvant être obtenu à partir des composants i à iii, d'un réticulant au moins trifonctionnel ou d'un agent d'allongement de chaîne difonctionnel ;
c) 5 à 50% en poids d'un ou de plusieurs polymères choisis dans le groupe constitué par : le poly(acide lactique), la polycaprolactone, le polyhydroxyalcanoate, le poly(carbonate d'alkylène), le chitosane et le gluten et d'un ou plusieurs polyesters à base de diols aliphatiques et d'acides dicarboxyliques aliphatiques et
0 à 2% en poids d'un promoteur de compatibilité.

5. Procédé selon la revendication 4, les mélanges contenant 0,05 à 2% en poids d'un poly(méth)acrylate contenant époxyde comme promoteur de compatibilité.

6. Procédé selon la revendication 4, le composant c) étant le poly(acide lactique).

7. Mélanges de polymères, contenant
a) 5 à 30% en poids d'un polyester a biodégradable contenant :
i) 65 à 80% en mole, par rapport au composants i à ii, d'un ou de plusieurs dérivés d'acide dicarboxylique ou d'un ou de plusieurs acides dicarboxyliques choisis dans le groupe constitué par : l'acide succinique, l'acide adipique, l'acide sébacique, l'acide azélaïque et l'acide brassylique ;
ii) 35 à 20% en mole, par rapport aux composants i à ii, d'un dérivé d'acide téréphtalique ;
iii) 98 à 102% en mole, par rapport aux composants i à ii, d'une C₂-C₈-alkylènediol ou d'un C₂-C₆-oxyalkylènediol ;
iv) 0,05 à 2% en poids, par rapport au polymère pouvant être obtenu à partir des composants i à iii, d'un réticulant au moins trifonctionnel ou d'un agent d'allongement de chaîne difonctionnel ;
b) 80 à 20% en poids d'un polyester b biodégradable, aliphatique-aromatique pouvant être obtenu par polycondensation de :
i) 40 à 60% en mole, par rapport au composants i à ii, d'un ou de plusieurs dérivés d'acide dicarboxylique ou d'un ou de plusieurs acides dicarboxyliques choisis dans le groupe constitué par : l'acide succinique, l'acide adipique, l'acide sébacique, l'acide azélaïque et l'acide brassylique ;
ii) 60 à 40% en mole, par rapport aux composants i à ii, d'un dérivé d'acide téréphtalique ;
iii) 98 à 102% en mole, par rapport aux composants i à ii, d'une C₂-C₈-alkylènediol ou d'un C₂-C₆-oxyalkylènediol ;
c) 15 à 50% en poids d'un ou de plusieurs polymères choisis dans le groupe constitué par : le poly(acide lactique), la polycaprolactone, le polyhydroxyalcanoate, le poly(carbonate d'alkylène), le chitosane et le gluten et d'un ou plusieurs polyesters à base de diols aliphatiques et d'acides dicarboxyliques aliphatiques et
0 à 2% en poids d'un promoteur de compatibilité.
